# FASCICULE DE BREVET EUROPEEN

(11) **EP 3 564 118 B1**
(45) Date de publication et mention de la délivrance du brevet: **24.03.2021**
(21) Numéro de dépôt: 19172298.2
(22) Date de dépôt: 02.05.2019
(51) Int. Cl.: F16D 5/00, F16D 11/16, F16D 11/00, B64C 25/26, F16D 127/06, B64C 25/50

(54) **DISPOSITIF DE VERROUILLAGE À VERROU ROTATIF À COMMANDE IMPULSIONNELLE**
VERRIEGELUNGSVORRICHTUNG BESTEHEND AUS EINEM IMPULSREGULIERTEN DREHSCHLOSS
LOCKING DEVICE COMPRISING A ROTARY LOCK WITH IMPULSE COMMAND

(30) Priorité: 04.05.2018 FR 1853897
(43) Date de publication de la demande: 06.11.2019
(73) Titulaire: Safran Landing Systems, 78140 Vélizy-Villacoublay (FR)
(72) Inventeur: DUBACHER, Bertrand, 77550 MOISSY-CRAMAYEL (FR); QUENERCH'DU, Marc, 77550 MOISSY-CRAMAYEL (FR); EUZET, Bertrand, 77550 MOISSY-CRAMAYEL (FR)
(74) Mandataire: Lavaud, Thomas

(56) Documents cités:
- EP-A1- 0 247 917
- FR-A1- 2 829 206
- FR-A1- 2 990 411
- JP-A- 2010 135 666

## Description

L'invention concerne un dispositif de verrouillage à verrou rotatif à commande impulsionnelle pour bloquer deux éléments en mouvement l'un par rapport à l'autre.

### ARRIERE PLAN DE L'INVENTION

En aéronautique, et en particulier dans le domaine des trains d'atterrissage, de nombreux éléments mobiles relativement l'un à l'autre doivent pouvoir être verrouillés en position. Par exemple, on peut vouloir verrouiller la tige d'un vérin sur son cylindre en position détendue ou rétractée, ou encore verrouiller un pignon monté fou sur un arbre pour permettre une transmission de couple.

On a proposé dans le document FR2952414 un dispositif de verrouillage à griffes d'une tige coulissante dans un corps de vérin, dans lequel un manchon verrouilleur est monté rotatif sur le corps du vérin pour présenter une position angulaire verrouilleuse empêchant les griffes de s'écarter, et une position angulaire libératrice autorisant l'écartement des griffes.

On a par ailleurs proposé dans le document FR2829206 d'équiper un frein de roue d'aéronef d'un dispositif de blocage de sécurité sous la forme d'un frein à friction à munis de moyens d'actionnement à commande impulsionnelle servant à provoquer le passage du dispositif de blocage de sécurité de l'état de verrouillage à l'état de libération, qui sont stables. Les deux états correspondent à deux positions axiales stables d'un sélecteur faisant partie d'un mécanisme connu sous le nom de « click-pen », puisqu'on le retrouve couramment dans des stylos à pointe rétractable. Dans l'une des positions axiales du sélecteur, les organes de friction du dispositif de blocage sont en contact et bloquent donc le frein, et dans l'autre des positions axiales du sélecteur, les organes de friction du dispositif de blocage sont éloignées et libèrent donc le frein. Ces positions axiales stables correspondent à des positions angulaires successives du sélecteur qui est également mobile en rotation par coopération de surfaces de cames inclinées, ledit sélecteur étant pivoté de l'une vers l'autre des positions par les moyens d'actionnement impulsionnels qui imposent un déplacement axial du sélecteur à l'encontre d'un organe ressort, le déplacement axial du sélecteur provoquant sa rotation.

### OBJET DE L'INVENTION

L'invention vise à proposer un dispositif de verrouillage à commande impulsionnelle pour bloquer deux éléments en mouvement l'un par rapport à l'autre, de constitution très simple.

### PRESENTATION DE L'INVENTION

En vue de la réalisation de ce but, on propose un dispositif de verrouillage selon la revendication 1.

Contrairement à l'utilisation qui en est faite dans le document FR2829206, on n'exploite pas ici les positions axiales du sélecteur, mais ses positions angulaires, pour faire tourner le verrou rotatif du dispositif de l'invention. La rotation du sélecteur provoque la rotation du verrou, qui se retrouve alternativement dans la position de verrouillage ou dans la position de libération.

La commande impulsionnelle peut se résumer à un simple électro-aimant, très fiable et simple à implémenter, dont la fonction est de déplacer le sélecteur axialement à l'encontre de l'organe ressort. On prévoira entre le verrou et le sélecteur toute liaison rotative laissant libre un déplacement axial entre ces deux éléments.

Le dispositif de l'invention est particulièrement adapté au verrouillage angulaire de deux éléments rotatifs coaxiaux comme un arbre (ou un entraîneur) et un pignon. Selon un mode de réalisation particulier de l'invention, on prévoit sur l'arbre au moins un obstacle monté coulissant radialement entre une position escamotée dans laquelle le pignon peut tourner librement sur l'arbre, et une position en saillie dans laquelle l'obstacle bloque le pignon sur l'arbre, le verrou rotatif comprenant une douille montée tournante dans l'arbre coaxialement à celui-ci en regard de l'obstacle et présentant des positions angulaires successives dont une position de libération dans laquelle l'obstacle se loge dans un creux de la douille pour être escamoté, et, alternativement, une position de verrouillage dans laquelle l'obstacle est poussé par la douille pour être maintenue en saillie.

De préférence, la douille porte des rouleaux disposés pour, dans la position de libération, laisser un espace suffisant à l'obstacle pour qu'il s'escamote entre deux rouleaux, et dans la position de verrouillage, venir directement en regard de l'obstacle pour le maintenir en saillie.

De préférence alors, le sélecteur est monté à rotation sur l'arbre coaxialement à celui-ci, tout en étant lié en rotation à la douille.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 est une vue schématique du bas d'un atterrisseur équipé d'un dispositif d'orientation comportant un verrou rotatif selon l'invention ;
- la figure 2 est une vue de dessus de l'atterrisseur de la figure 1 ;
- la figure 3 est une vue en coupe de l'actionneur électromécanique d'orientation selon la ligne III-III de la figure 2 ;
- la figure 3A est une vue agrandie du détail A de la figure 3 ;
- les figures 4 et 5 sont des vues en coupe selon la ligne IV-IV de la figure 3 au niveau du verrou rotatif, illustré respectivement en position de verrouillage et en position de libération ;
- la figure 6 est une vue éclatée du mécanisme d'indexation angulaire et du verrou rotatif ;
- les figures 7, 8, 9 sont des vues en perspective de pièces du mécanisme d'indexation angulaire de la figure 6.

### DESCRIPTION DETAILLEE DE L'INVENTION

En référence aux figures, l'invention est illustrée ici en application à l'orientation des roues portées par la partie inférieure orientable d'un atterrisseur. Cependant, cette application n'est pas limitative et d'autres applications sont envisageables.

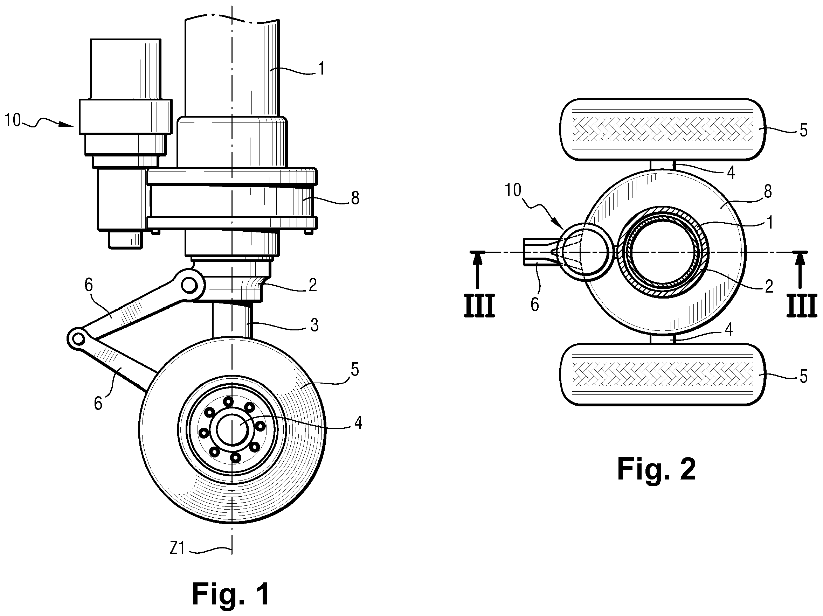

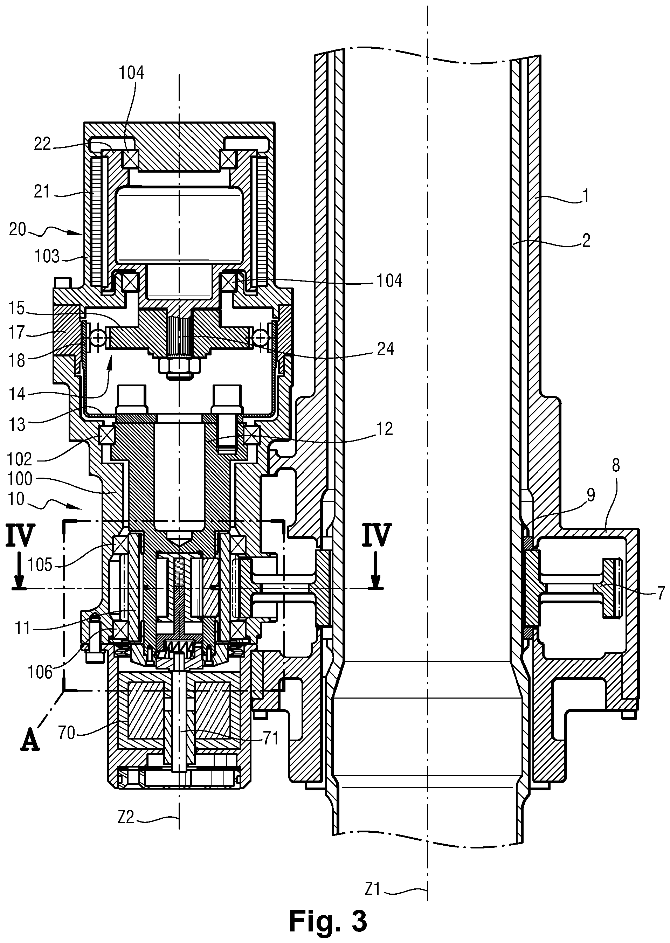

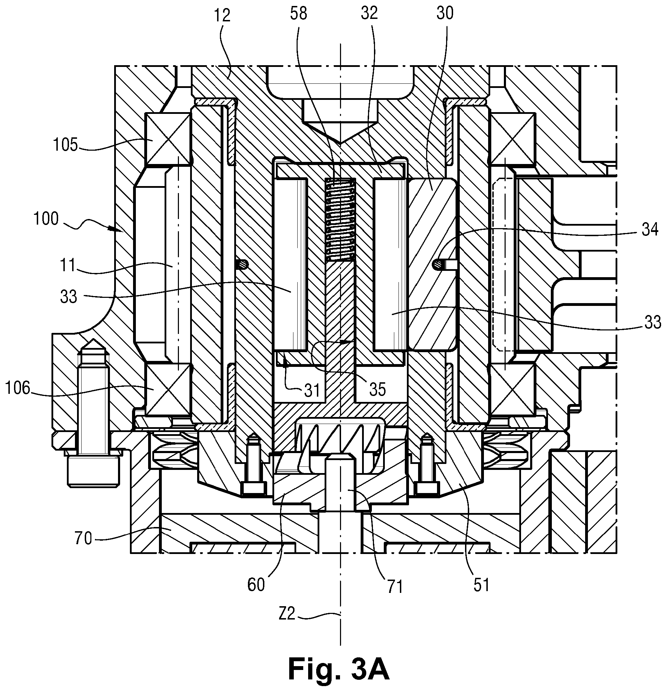

En référence aux figures 1 et 2, et conformément à un mode particulier de réalisation de l'invention, l'atterrisseur illustré comporte un caisson 1 dans lequel un tube tournant 2 est monté pour tourner selon un axe longitudinal Z1. Un amortisseur télescopique 3 s'étend intérieurement au tube tournant 2. La partie inférieure de l'amortisseur s'étend en saillie du tube 2 et porte un essieu 4 recevant des roues 5. Un compas 6 s'étend entre le tube tournant 2 et l'amortisseur 3 pour lier en rotation le tube tournant 2 et l'amortisseur 3, tout en permettant à l'amortisseur de s'enfoncer librement dans le caisson 1 selon l'axe Z1. Le tube tournant 2 porte à son extrémité inférieure une roue dentée 7 (visible à la figure 3) qui est logée dans un logement 8 du caisson 1 et qui est rendue solidaire en rotation du tube tournant 2 par des cannelures 9.

L'atterrisseur est équipé d'un dispositif d'orientation comportant un actionneur électromécanique d'orientation 10 adapté à coopérer avec la roue dentée 7 pour faire tourner le tube 2, et donc les roues 5 par l'intermédiaire des compas 6.

En référence à la figure 3, la roue dentée 7 est attaquée par un pignon de sortie 11 de l'actionneur électromécanique 10 qui est monté pour tourner sur celui-ci selon un axe Z2 parallèle à l'axe Z1 de l'atterrisseur sur un carter 100 de l'actionneur 10 au moyen de roulements 105,106. Le pignon 11 est sélectivement entraîné en rotation par un arbre ou entraîneur 12 monté tournant sur le carter 100 de l'actionneur 10 au moyen d'un roulement 102. La liaison sélective entre le pignon 11 et l'entraîneur 12, qui fait l'objet de l'invention, sera explicitée en détail plus loin.

L'entraîneur 12 est solidaire de l'organe de sortie 13 d'un réducteur 14 du type « harmonic drive » illustré notamment dans le document US2906143. L'organe de sortie 13 comporte une paroi circulaire en cloche déformable 18 portant sur sa face externe des dents qui coopèrent avec des dents en regard d'une couronne 17 solidaire du carter 100, en nombre légèrement plus important. La coopération des dents de l'organe de sortie 13 et de la couronne 17 est assurée par déformation de la paroi circulaire 18 provoquée par un organe d'entrée 15 du réducteur (connu sous le nom de « wave generator »), forçant la coopération des dents en deux portions diamétralement opposées. On remarquera que la couronne 17 forme ici une partie du carter de l'actionneur électromécanique d'orientation.

L'organe d'entrée 15 du réducteur 14 est entraîné en rotation par un moteur électrique 20 comportant un stator 21 porté par une partie 103 du carter 100 solidarisée à la couronne 17, et un rotor 22 monté tournant sur la partie de carter 103 au moyen de roulements 104. Le rotor 22 comporte un arbre de sortie 24 cannelé engagé dans un orifice cannelé conforme de l'organe d'entrée 15 pour son entraînement en rotation. Une rotation commandée du rotor 22 provoque la rotation du pignon 11 via le réducteur 14 et, partant provoque la rotation de la roue dentée 7 et donc une orientation des roues 5.

On détaille maintenant, en référence aux figures 3A, 4,5,6, le cœur de l'invention, à savoir la liaison sélective entre l'entraîneur 12 et le pignon 11.

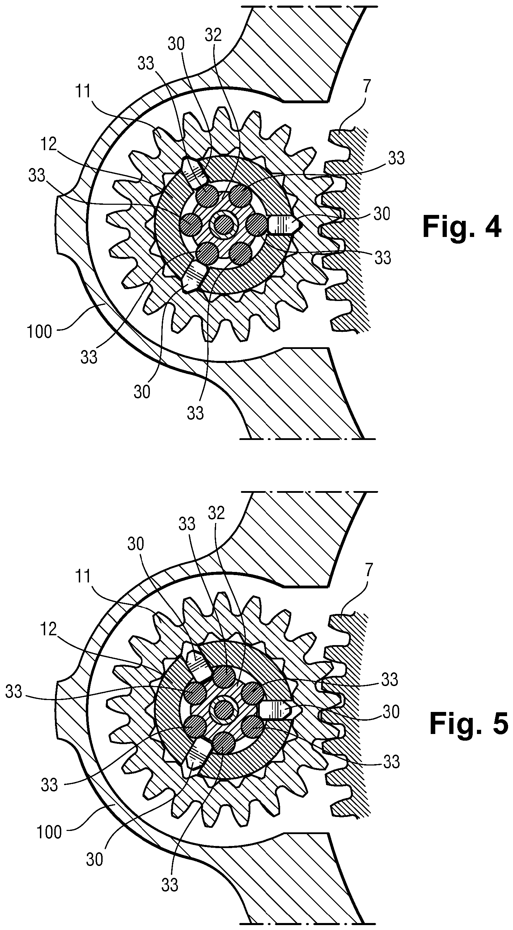

Le pignon 11 peut être verrouillé en rotation sur l'entraîneur 12 pour permettre son entraînement par le moteur 20, ou au contraire libéré en rotation, pour par exemple permettre la libre orientation des roues de l'atterrisseur si le moteur 20 venait à se bloquer. Pour ce faire, et comme cela est plus visible aux figures 4 et 5, l'entraîneur 12 comporte des fentes radiales dans lesquelles sont logés des obstacles, en l'occurrence des couteaux 30 montés mobiles radialement sur l'entraîneur 12 entre une position en saillie illustrée à la figure 4 dans laquelle une extrémité pointue des couteaux 30 pénètre dans un réceptacle conforme du pignon 11 pour verrouiller en rotation le pignon 11 sur l'entraîneur 12, et une position escamotée illustrée à la figure 5 dans lesquels les couteaux 30 ne dépassent pas de la paroi externe de l'entraîneur 12 et permettent la libre rotation du pignon 11 sur l'entraîneur 12. Les couteaux sont rappelés dans la position escamotée par un jonc élastique 34 visible à la figure 3A.

Un verrou rotatif 31, prenant ici la forme d'une douille 32 portant une pluralité de rouleaux 33 parallèles, est monté rotatif à l'intérieur de l'entraîneur 12 coaxialement à celui-ci pour présenter des positions angulaires successives, dont des positions de verrouillage dans chacune desquelles certains des rouleaux 33 sont directement en regard des couteaux 30 pour les maintenir en saillie et les empêcher de s'escamoter comme illustré à la figure 4, et, alternativement, des positions de libération dans chacune desquelles les rouleaux 33 sont décalés des couteaux 30 de sorte que ceux-ci peuvent s'escamoter dans un creux de la douille entre deux rouleaux 33, comme illustré à la figure 5.

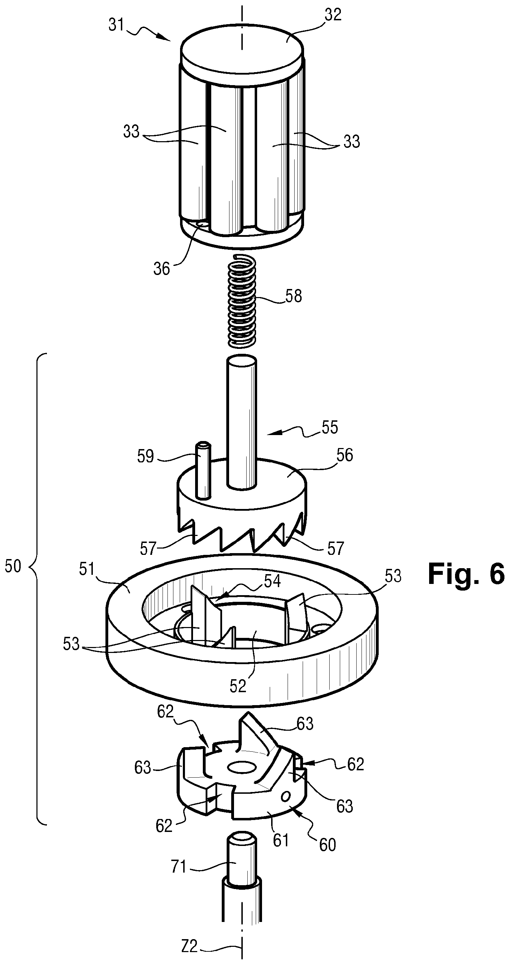

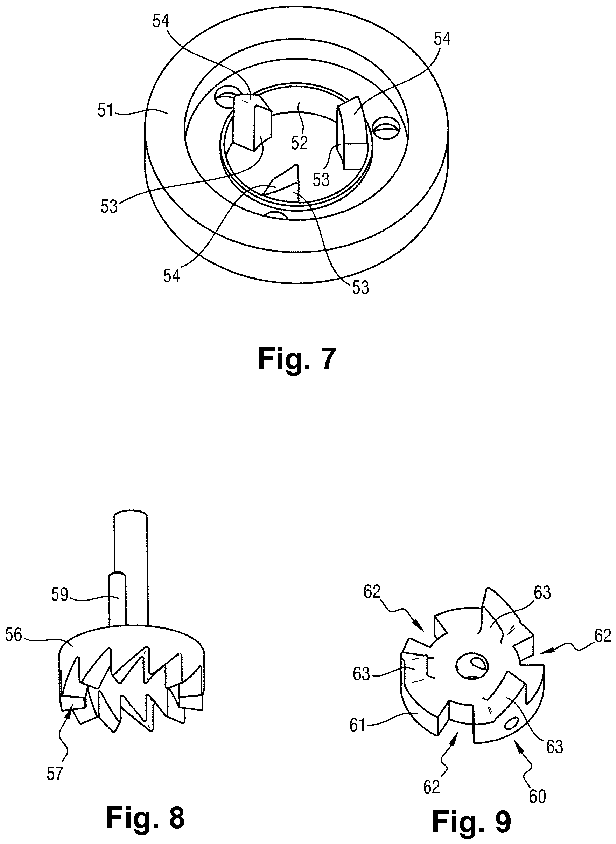

Le verrou rotatif 31 est tourné d'une position à la suivante au moyen d'un mécanisme d'indexation angulaire 50 détaillé à la figure 6 comprenant les éléments suivants, tous centrés sur l'axe Z2:
- une bague 51, détaillée figure 7, rapportée sur l'extrémité inférieure de l'entraîneur 12. La bague 51 définit un alésage 52 duquel s'étend en saillie interne trois guides 53 parallèles terminés par des pentes 54 ;
- un sélecteur 55, détaillé à la figure 8, comportant une cloche 56 dont le bord terminal est découpé pour présenter des pentes successives 57. La cloche 56 est solidaire d'une tige qui vient en service se loger dans un puits central 35 de la douille 32 pour assurer le guidage axial et rotatif du sélecteur 55 selon l'axe Z2. En outre, le sélecteur 55 comporte un doigt 59 qui est reçu dans un orifice 36 de la base de la douille 32 pour solidariser le sélecteur 55 et la douille 32 en rotation, tout en permettant un déplacement axial du sélecteur 55 ;
- un ressort de rappel 58 logé dans le puits central 35 de la douille 32 pour repousser le sélecteur 55 vers la bague 51 de sorte que les pentes 57 du sélecteur viennent en appui contre les pentes 54 des guides 53 de la bague 51;
- enfin un poussoir 60, détaillé figure 9, monté à l'extrémité d'un doigt 71 d'un électroaimant 70 disposé dans la partie inférieure du carter 100 pour être déplacé axialement selon l'axe Z2 en repoussant le sélecteur 55 à l'encontre du ressort 58. Le poussoir 60 comporte une surface externe circulaire qui coopère avec l'alésage 52 de la bague 51 pour son guidage axial. Le poussoir 60 comporte trois encoches 62 pour recevoir les guides 53 de la bague 51 de sorte à lier en rotation le poussoir 60 et la bague 51, tout en permettant le déplacement axial du poussoir 60. Le poussoir 60 comporte par ailleurs trois pentes 63 qui s'étendent en regard des pentes 57 du sélecteur 55.

L'ensemble de l'électro-aimant 70, du mécanisme d'indexation angulaire 50 et du verrou rotatif 32 forme le dispositif de verrouillage à commande impulsionnelle selon l'invention. Son fonctionnement est le suivant. Lorsque l'éléctro-aimant 70 n'est pas alimenté, le poussoir 60 est légèrement dégagé des pentes 57 du sélecteur 55, qui reposent sur les extrémités des guides 54, définissant ainsi une position angulaire du sélecteur 55, et partant, une position angulaire du verrou rotatif 32 (par exemple la position de verrouillage). Pour faire passer le verrou rotatif 31 à son autre position (en l'occurrence la position de libération), il suffit d'alimenter brièvement l'électro-aimant 70 pour que le doigt 71 pousse le poussoir 60 et donc le sélecteur 55 à l'encontre du ressort 58. Lorsque les pentes 57 du sélecteur sont entièrement dégagées des pentes 54 des guides 53 de la bague 51, les pentes 57 du sélecteur glissent sur les pentes 63 du poussoir 60, provoquant la rotation du sélecteur 55. Lorsque l'électro-aimant 70 n'est plus alimenté, le doigt 71 se rétracte et le ressort 58 repousse le sélecteur 55 vers la bague 51 de sorte que le sélecteur 55 vienne reposer contre les guides 53, les pointes des guides 53 venant se loger dans les creux des pentes 57 du sélecteur 55, définissant ainsi une nouvelle position angulaire qui correspond à la position de libération du verrou rotatif 32.

Le fonctionnement du mécanisme d'indexation angulaire 50 ressemble à celui d'un mécanisme dit « click pen » d'un stylo à pointe escamotable, si ce n'est que le sélecteur 55 du mécanisme d'indexation angulaire de l'invention ne comporte pas deux positions axiales distinctes, et que l'on exploite ici plutôt les positions angulaires successives du sélecteur 55.

Une simple impulsion électrique permet ainsi l'actionnement du verrou rotatif grâce à l'électro-aimant 70. On notera que la bague 51 est solidaire de l'entraîneur 12 et tourne donc avec lui, ainsi que le poussoir 60 puisque celui-ci est indexé en rotation sur la bague 51. Par contre, l'électro-aimant 70 est solidaire du carter 100 et donc fixe.

L'invention n'est pas limitée à ce qui vient d'être décrit. La portée de l'invention est délimitée par les revendications. En particulier, bien que l'on ait décrit ici une disposition dans laquelle le sélecteur du mécanisme d'indexation angulaire est coaxial avec le verrou rotatif, on pourra disposer le mécanisme d'indexation angulaire selon un autre axe que l'axe de rotation du verrou rotatif, par exemple un axe parallèle avec celui-ci, du moment que soit assurée une liaison en rotation entre le sélecteur et le verrou rotatif.

Bien que l'on ait décrit ici l'application de l'invention à un verrouillage en rotation d'un pignon sur un entraîneur ou un arbre, l'invention s'applique plus généralement à tout type de verrouillage de deux éléments mobiles l'un par rapport à l'autre, que ce soit en rotation ou en translation. Par exemple, on peut tout à fait appliquer l'invention à un verrouillage de deux éléments coulissants l'un par rapport à l'autre au moyen d'un verrouillage à griffes équipé d'un manchon verrouilleur rotatif tel que décrit dans le document FR2952414. Ceci nécessite de lier la rotation du manchon verrouilleur rotatif avec la rotation d'un sélecteur de mécanisme d'indexation angulaire selon l'invention.

## Revendications

1. Dispositif de verrouillage pour immobiliser entre eux deux éléments (11,12) montés mobiles relativement l'un à l'autre, tel que le dispositif de verrouillage comporte un verrou (31), un mécanisme d'indexation angulaire (50), un actionneur à commande impulsionnelle (70,71) et un organe ressort, le verrou étant configuré pour être monté rotatif relativement à l'un des éléments pour présenter des positions angulaires successives de verrouillage et de libération dans lesquelles, alternativement, le verrou immobilise les deux éléments et libère les deux éléments, le verrou étant lié en rotation à un sélecteur (55) du mécanisme d'indexation angulaire (50) actionné par l'actionneur à commande impulsionnelle (70,71) agencé pour pousser le sélecteur à l'encontre de l'organe ressort (58) pour provoquer la rotation du sélecteur à chaque impulsion et ainsi faire passer le verrou d'une position angulaire à l'autre.

2. Dispositif de verrouillage selon la revendication 1, dans lequel le mécanisme d'indexation angulaire comprend, centrés sur un axe central (Z2):
- une bague (51) qui définit un alésage (52) duquel s'étend en saillie interne des guides (53) parallèles terminés par des pentes (54) ;
- le sélecteur (55), comportant une cloche (56) dont le bord libre de la paroi est découpé pour présenter des pentes successives (57), le sélecteur étant mobile à la fois en rotation et en translation, et comportant des moyens (59) de liaison en rotation avec le verrou rotatif, l'organe ressort étant un ressort de rappel (58) disposé pour repousser le sélecteur (55) vers la bague (51) de sorte que les pentes (57) du sélecteur viennent en appui contre les pentes (54) des guides (53) de la bague (51);
- un poussoir (60) disposé pour être déplacé axialement par l'actionneur à commande impulsionnelle en repoussant le sélecteur (55) à l'encontre du ressort (58), le poussoir (60) comportant une surface externe circulaire qui coopère avec l'alésage (52) de la bague (51) pour son guidage axial, ainsi que des encoches (62) pour recevoir les guides (53) de la bague (51) de sorte à lier en rotation le poussoir (60) et la bague (51), tout en permettant le déplacement axial du poussoir (60) ; le poussoir (60) présentant des pentes (63) qui s'étendent en regard des pentes (57) du sélecteur (55).

3. Dispositif de verrouillage selon la revendication 1, dans lequel le verrou rotatif (31) et le sélecteur (55) sont coaxiaux.

4. Ensemble comportant deux éléments rotatifs coaxiaux, comme un arbre (12) et un pignon (11) montés libres en rotation, et muni d'un dispositif de verrouillage selon la revendication 1, l'arbre comportant au moins un obstacle (30) monté coulissant radialement entre une position escamotée dans laquelle le pignon (11) peut tourner librement sur l'arbre, et une position en saillie dans laquelle l'obstacle bloque le pignon sur l'arbre, le verrou rotatif (31) comprenant une douille (32) montée tournante dans l'arbre coaxialement à celui-ci en regard de l'obstacle et présentant une position de libération dans laquelle l'obstacle se loge dans un creux de la douille pour être escamoté, et une position de verrouillage dans laquelle l'obstacle est poussé par la douille pour être maintenue en saillie.

## Patentansprüche

1. Verriegelungsvorrichtung zum gegenseitigen Blockieren zweier Elemente (11, 12), die relativ zueinander beweglich gelagert sind, wobei die Verriegelungsvorrichtung einen Riegel (31) umfasst, einen Winkelindexierungsmechanismus (50), einen impulsgesteuerten Aktor (70, 71) und ein Federelement, wobei der Riegel ausgebildet ist, um relativ zu einem der Elemente drehbar gelagert zu sein, um aufeinanderfolgende Winkelpositionen zur Verriegelung und zur Freigabe aufzuweisen, in denen der Riegel abwechselnd die beiden Elemente blockiert und die beiden Elemente freigibt, wobei der Riegel drehfest mit einem Selektor (55) des Winkelindexierungsmechanismus (50) verbunden ist, der durch den impulsgesteuerten Aktor (70, 71) betätigt wird, der ausgebildet ist, um den Selektor gegen das Federelement (58) zu drücken, um die Drehung des Selektors bei jedem Impuls zu verursachen und somit den Riegel von einer Winkelposition in die andere zu bewegen.

2. Verriegelungsvorrichtung nach Anspruch 1, bei der der Winkelindexierungsmechanismus zentriert auf eine zentrale Achse (Z2) umfasst:
- einen Ring (51), der eine Bohrung (52) definiert, von der parallele Führungen (53), die mit Schrägen (54) abschließen, nach innen vorstehen;
- den Selektor (55), der eine Glocke (56) umfasst, deren freier Rand der Wand eingeschnitten ist, um aufeinanderfolgende Schrägen (57) aufzuweisen, wobei der Selektor gleichzeitig in Rotation als auch in Translation beweglich ist und Mittel (59) zur drehfesten Verbindung mit dem Drehriegel umfasst, wobei das Federelement eine Rückstellfeder (58) ist, die angeordnet ist, um den Selektor (55) zum Ring (51) zurückzudrücken, damit die Schrägen (57) des Selektors an den Schrägen (54) der Führungen (53) des Rings (51) zur Anlage kommen;
- einen Stößel (60), der angeordnet ist, um axial von dem impulsgesteuerten Aktor verschoben zu werden und dadurch den Selektor (55) gegen die Feder (58) zurückzudrücken, wobei der Stößel (60) eine kreisförmige Außenfläche umfasst, die mit der Bohrung (52) des Rings (51) zwecks dessen axialer Führung zusammenwirkt, sowie Kerben (62), um die Führungen (53) des Rings (51) derart aufzunehmen, dass der Stößel (60) und der Ring (51) drehfest verbunden sind, während die axiale Verschiebung des Stößels (60) gestattet ist; wobei der Stößel (60) Schrägen (63) aufweist, die sich gegenüber den Schrägen (57) des Selektors (55) erstrecken.

3. Verriegelungsvorrichtung nach Anspruch 1, bei der der Drehriegel (31) und der Selektor (55) koaxial sind.

4. Anordnung, umfassend zwei koaxiale Drehelemente, wie eine Welle (12) und ein Ritzel (11), die frei drehbar gelagert sind, und versehen mit einer Verriegelungsvorrichtung nach Anspruch 1, wobei die Welle mindestens ein Hindernis (30) umfasst, das zwischen einer eingefahrenen Position, in der sich das Ritzel (11) auf der Welle frei drehen kann, und einer vorstehenden Position, in der das Hindernis das Ritzel auf der Welle blockiert, radial verschiebbar gelagert ist, wobei der Drehriegel (31) eine Hülse (32) umfasst, die in der Welle koaxial zu derselben gegenüber dem Hindernis drehbar gelagert ist und eine Freigabeposition aufweist, in der sich das Hindernis in einer Vertiefung der Hülse anordnet, um eingefahren zu sein, und eine Verriegelungsposition, in die das Hindernis von der Hülse gedrückt wird, um vorstehend gehalten zu werden.

## Claims

1. A locking device for preventing movement between two elements (11, 12) that are mounted to move relative to each other, the device includes a lock (31), an angular indexing mechanism (50), a pulse-controlled actuator (70, 71) and a spring member, the lock being mounted to rotate relative to one of the elements in order to present successive angular positions for locking and for release in which the lock alternates between preventing and allowing relative movement between the two elements, the lock being constrained to rotate with a selector (55) of the angular indexing mechanism (50) actuated by the pulse-controlled actuator (70, 71) arranged to push the selector against the spring member (58) in order to cause said selector to turn on each pulse and thereby cause the lock to pass from one angular position to the other.

2. A locking device according to claim 1, wherein the angular indexing mechanism comprises, centered on a central axis (Z2):
• a ring (51) that defines a bore (52) from which parallel guides (53) project inwards, the guides being terminated by slopes (54);
• the selector (55), which selector comprises a bell (56) with the free edge of its wall being cut to present successive slopes (57), the selector being movable both in rotation and in translation and including means (59) for constraining it to rotate with the rotary lock, the spring member being a return spring (58) being arranged to push the selector (55) back towards the ring (51) so that the slopes (57) of the selector come to bear against the slopes (54) of the guides (53) of the ring (51); and
• a pusher (60) arranged to be moved axially by the pulse-controlled actuator thereby pushing the selector (55) back against the spring (58), the pusher (60) having a circular outside surface that co-operates with the bore (52) of the ring (51) in order to guide it axially, together with notches (62) to receive the guides (53) of the ring (51) so as to constrain the pusher (60) and the ring (51) in rotation, while allowing the pusher (60) to move axially; the pusher (60) presenting slopes (63) that extend in register with the slopes (57) of the selector (55) .

3. A locking device according to claim 1, wherein the rotary lock (31) and the selector (55) are coaxial.

4. An assembly comprising two coaxial rotary elements such as a shaft (12) and a pinion (11) mounted to rotate freely, and provided with a locking device according to claim 1, the shaft including at least one obstacle (30) mounted to slide radially between a retracted position in which the pinion (11) can turn freely on the shaft, and a projecting position in which the obstacle blocks the pinion on the shaft, the rotary lock (31) comprising a bushing (32) rotatably mounted coaxially inside the shaft in register with the obstacle and presenting a release position in which the obstacle is received in a recess in the bushing in order to be retracted, and a locking position into which the obstacle is pushed by the bushing so as to be held in a projecting position.
